# EUROPEAN PATENT APPLICATION

(11) **EP 3 570 403 A1**
(43) Date of publication of application: **20.11.2019**
(21) Application number: 17891131.9
(22) Date of filing: 24.10.2017
(51) Int. Cl.: H02J 7/00

(54) **ELECTRONIC CIGARETTE AND BATTERY PROTECTION CIRCUIT THEREOF**

(30) Priority: 13.01.2017 CN 201710025393
(71) Applicant: Changzhou Patent Electronic Technology Co., Ltd, Jiangsu 213001 (CN)
(72) Inventor: QIU, Weihua, Changzhou Jiangsu 213125 (CN)
(74) Representative: Zaboliene, Reda
(86) International application number: PCT/CN2017/107449
(87) International publication number: WO 2018/129979

(57) **Abstract**

An electronic cigarette and a battery protection circuit thereof. The battery protection circuit (10) is used for connecting with a battery (90). The battery protection circuit (10) has a first connecting end (101) and a second connecting end (102), the first connecting end (101) being connected with one end of a battery (90) and the second connecting end (102) being connected with the other end of the battery (90). The battery protection circuit (10) further comprises a third connecting end (103), a fourth connecting end (104), a fifth connecting end (105), and a sixth connecting end (106), the third connecting end (103) and the fourth connecting end (104) being both used for connecting with a positive voltage network, and the fifth connecting end (105) and the sixth connecting end (106) being both used for connecting with a ground network. When the first connecting end (101) is connected with the positive electrode of the battery and the second connecting end (102) is connected with the negative electrode of the battery, the third connecting end (103) is in communication with the first connecting end (101) and the fifth connecting end (105) is in communication with the second connecting end (102). When the first connecting end (101) is connected with the negative electrode of the battery and the second connecting end (102) is connected with the positive electrode of the battery, the sixth connecting end (106) is in communication with the first connecting end (101) and the fourth connecting end (104) is in communication with the second connecting end (102). The electronic cigarette and the battery protection circuit can prevent inverse connection with a battery.

## Description

### TECHNICAL FIELD

The present application relates to the technical field of smoking simulation, and more particularly, to an electronic cigarette and a battery protection circuit of the electronic cigarette.

### BACKGROUND

Conventional electronic cigarettes can be powered on to work only if a battery is installed properly in a forward direction. When the battery is installed reversely, the electronic cigarette is powered off and cannot work, and the battery may be burned out immediately if a USB (Universal Serial Bus) wire is plugged to the electronic cigarette for charging the battery. For the electronic cigarette having a replaceable battery or having a non-replaceable battery, in order to avoid a reverse assembly of the battery, the user and the producer should be cautious when assembling the battery. Particularly for the electronic cigarette having the replaceable battery, if the user assembles the battery in a dark or poor lighting environment, the battery may be assembled reversely, causing the battery or the product to be damaged due to a reverse assembly.

### SUMMARY

Accordingly, it is necessary to provide a battery protection circuit that can provide voltage output or voltage input when the battery is installed either in a forward direction or in a reverse direction, so as to protect the battery and the circuit.

Further, an electronic cigarette is also provided.

A battery protection circuit is configured for connecting with a battery. The battery protection circuit includes a first connecting end and a second connecting end. The first connecting end is configured for connecting with an electrode of the battery, and the second connecting end is configured for connecting with an opposite electrode of the battery. The battery protection circuit further includes a third connecting end, a fourth connecting end, a fifth connecting end and a sixth connecting end. The third connecting end and the fourth connecting end are both configured for connecting with a positive voltage terminal. The fifth connecting end and the sixth connecting end are both configured for connecting with the ground terminal.

When the first connecting end is connected to the positive electrode of the battery and the second connecting end is connected to the negative electrode of the battery, the third connecting end is in connection with the first connecting end and the fifth connecting end is in connection with the second connecting end.

When the first connecting end is connected to the negative electrode of the battery and the second connecting end is connected to the positive electrode of the battery, the sixth connecting end is in connection with the first connecting end and the fourth connecting end is in connection with the second connecting end.

In one embodiment, the battery protection circuit includes a first switch unit, a second switch unit, a third switch unit and a fourth switch unit. Each switch unit has three ends, the three ends of each switch unit are comprised of a first end, a second end and a control end. The turning on or off between the first end and the second end is controlled according to the voltage level applied on the control end. The first switch unit and the fourth switch unit are controlled to be turned on under a high-level voltage, and controlled to be turned off under a low-level voltage. The second switch unit and the third switch unit are controlled to be turned on under a low-level voltage, and controlled to be turned off under a high-level voltage.

For the first switch unit, the first end acts as the third connecting end and is connected to the positive voltage terminal, the second end and the control end are both connected to the first connecting end.

For the second switch unit, the first end acts as the sixth connecting end and is connected to the ground terminal, the second end and the control end are both connected to the first connecting end.

For the third switch unit, the first end acts as the fifth connecting end and is connected to the ground terminal, the second end and the control end are both connected to the second connecting end.

For the fourth switch unit, the first end acts as the fourth connecting end and is connected to the positive voltage terminal, the second end and the control end are both connected to the second connecting end.

In one embodiment, both the first switch unit and the fourth switch unit are NMOS transistors, the first end is a source terminal, the second end is a drain terminal, and the control end is a gate terminal. Both the second switch unit and the third switch unit are PMOS transistors, the first end is a source terminal, the second end is a drain terminal, and the control end is a gate terminal.

In one embodiment, each of the first switch unit and the fourth switch unit adopts an AON6512 chip. The 1^{st} to 3^{rd} pins of the AON6512 chip of the first switch unit are led out for acting as the third connecting end and connecting with the positive voltage terminal, and the 4^{th} to 8^{th} pins of the AON6512 chip of the first switch unit are connected to the first connecting end. The 1^{st} to 3^{rd} pins of the AON6512 chip of the fourth switch unit are led out for acting as the fourth connecting end and connecting with the positive voltage terminal, and the 4^{th} to 8^{th} pins of the AON6512 chip of the fourth switch unit are connected to the second connecting end.

Each of the second switch unit and the third switch unit adopts an AON6411 chip. The 1^{st} to 3^{rd} pins of the AON6411 chip of the second switch unit are led out for acting as the sixth connecting end and connecting with the ground terminal, and the 4^{th} to 8^{th} pins of the AON6411 chip of the second switch unit are connected to the first connecting end. The 1^{st} to 3^{rd} pins of the AON6411 chip of the third switch unit are led out for acting as the fifth connecting end and connecting with the ground terminal, and the 4^{th} to 8^{th} pins of the AON6411 chip of the third switch unit are connected to the second connecting end.

In one embodiment, the battery protection circuit includes a first relay switch module and a second relay switch module. The first relay switch module includes a first coil and a first switch. The second relay switch module includes a second coil and a second switch.

Two ends of the first coil are connected to the first connecting end and the second connecting end, respectively. The normally opened contact of the first switch acts as the third connecting end and is connected to the positive voltage terminal, the normally closed contact of the first switch acts as the sixth connecting end and is connected to the ground terminal, and the common contact of the first switch is connected to the first connecting end.

Two ends of the second coil are connected to the first connecting end and the second connecting end, respectively. The normally opened contact of the second switch acts as the fifth connecting end and is connected to the ground terminal, the normally closed contact of the second switch acts as the fourth connecting end and is connected to the positive voltage terminal, and the common contact of the second switch is connected to the second connecting end.

The first connecting end is connected to the first coil and the second coil via a first anti-reverse diode, and the positive terminal of the first anti-reverse diode is connected to the first connecting end.

An electronic cigarette includes a master control circuit, an atomizing circuit, and the foregoing battery protection circuit. The battery protection circuit is configured for connecting with a battery so as to provide power for the master control circuit and the atomizing circuit.

In one embodiment, the electronic cigarette further includes a battery. The positive electrode of the battery is connected to the first connecting end of the battery protection circuit, and the negative electrode of the battery is connected to the second connecting end of the battery protection circuit. Or, the positive electrode of the battery is connected to the second connecting end of the battery protection circuit, and the negative electrode of the battery is connected to the first connecting end of the battery protection circuit.

In one embodiment, the battery is detachably or fixedly connected to the battery protection circuit.

In one embodiment, the battery is a rechargeable battery.

In one embodiment, the electronic cigarette further includes a receiving case and a battery case. The battery case is configured for receiving the battery. The battery case forms two first interfaces which are the same as each other, the two first interfaces are respectively led out to an outside of battery case from the positive electrode and the negative electrode of the battery. The receiving case is connected to the first connecting end and the second connecting end of the battery protection circuit. The receiving case forms two second interfaces which are the same as each other, the two second interfaces are respectively led out from the first connecting end and the second connecting end into an interior of the receiving case. The battery case is received in the receiving case and the first interfaces are connected to the second interfaces.

In the foregoing electronic cigarette and the foregoing battery protection circuit, when the positive electrode of the battery is connected to the first connecting end and the negative electrode of the battery is connected to the second connecting end, the first switch unit is turned on due to a high potential applied on the control end C of the first switch unit, the second switch unit is turned off due to a high potential applied on the control end C of the second switch unit, the third switch unit is turned on due to a low potential applied on the control end C of the third switch unit, and the fourth switch unit is turned off due to a low potential applied on the control end C of the fourth switch unit. Therefore, the battery outputs voltage through the first switch unit and the third switch unit.

When the negative electrode of the battery is connected to the first connecting end and the positive electrode of the battery is connected to the second connecting end, the first switch unit is turned off due to a low potential applied on the control end C of the first switch unit, the second switch unit is turned on due to a low potential applied on the control end C of the second switch unit, the third switch unit is turned off due to a high potential applied on the control end C of the third switch unit, and the fourth switch unit is turned on due to a high potential applied on the control end C of the fourth switch unit. Therefore, the battery outputs voltage through the second switch unit and the fourth switch unit. As a result, the battery can provide power for the electronic cigarette no matter how the battery is installed, to effectively prevent inverse connection.

### BRIEF DESCRIPTION OF THE DRAWINGS

FIG. 1a and FIG. 1b are functional schematic diagrams of a battery protection circuit according to an embodiment;
FIG. 2 is a block diagram of a battery protection circuit according to an embodiment;
FIG. 3 is a circuit diagram when the switch units in FIG. 2 adopt MOS transistors;
FIG. 4 is a circuit diagram when the switch units in FIG. 2 adopt chips;
FIG. 5 is a block diagram of a battery protection circuit according to another embodiment;
FIG. 6 is a block diagram of an electronic cigarette according to an embodiment;
FIG. 7 is a schematic diagram of a battery case and a receiving case.

### DETAILED DESCRIPTION OF THE PREFERRED EMBODIMENTS

Embodiments of the disclosure are described more fully hereinafter with reference to the accompanying drawings.

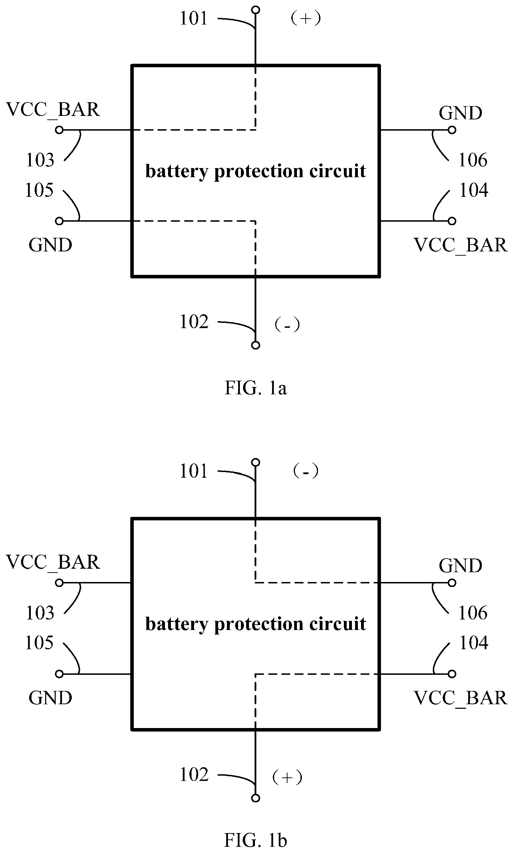

FIG. 1a and FIG. 1b relate to functional schematic diagrams of a battery protection circuit according to an embodiment. The battery protection circuit 10 includes a first connecting end 101, a second connecting end 102, a third connecting end 103, a fourth connecting end 104, a fifth connecting end 105, and a sixth connecting end 106. The battery protection circuit 10 is configured for connecting with a battery.

The third connecting end 103 and the fourth connecting end 104 are both configured for connecting with a positive voltage terminal VCC_BAR, the fifth connecting end 105 and the sixth connecting end 106 are both configured for connecting with ground terminal GND.

As shown in FIG. 1a, when the first connecting end 101 is connected to the positive electrode (+) of the battery and the second connecting end 102 is connected to the negative electrode (-) of the battery, the third connecting end 103 is in connection with the first connecting end 101 and the fifth connecting end 105 is in connection with the second connecting end 102.

As shown in FIG. 1b, when the first connecting end 101 is connected to the negative electrode (-) of the battery and the second connecting end 102 is connected to the positive electrode (+) of the battery, the sixth connecting end 106 is in connection with the first connecting end 101 and the fourth connecting end 104 is in connection with the second connecting end 102.

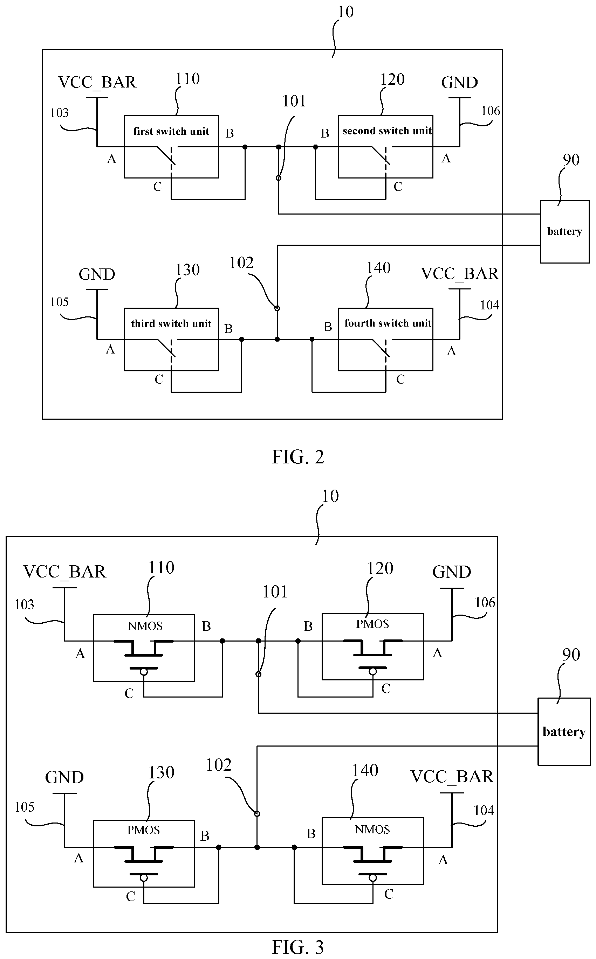

FIG. 2 shows a block diagram of a battery protection circuit according to an embodiment. The battery protection circuit 10 is configured for connecting with a battery 90. The first connecting end 101 is connected to one end of the battery 90, and the second connecting end 102 is connected to the other end of the battery 90.

The battery protection circuit 10 includes a first switch unit 110, a second switch unit 120, a third switch unit 130, and a fourth switch unit 140, wherein each switch unit has three ends. The three ends of each switch unit include a first end A, a second end B, and a control end C. The turning on or off between the first end A and the second end B is controlled according to the voltage level applied on the control end C. The first switch unit 110 and the fourth switch unit 140 are controlled to be turned on under a high-level voltage, and controlled to be turned off under a low-level voltage. The second switch unit 120 and the third switch unit 130 are controlled to be turned on under a low-level voltage, and controlled to be turned off under a high-level voltage.

As shown in FIG. 2, the first end A of the first switch unit 110 acts as the third connecting end 103 and is connected to the positive voltage terminal VCC_BAR, the second end B and the control end C of the first switch unit 110 are both connected to the first connecting end 101. The first end A of the second switch unit 120 acts as the sixth connecting end 106 and is connected to the ground terminal GND, the second end B and the control end C of the second switch unit 120 are both connected to the first connecting end 101.

The first end A of the third switch unit 130 acts as the fifth connecting end 105 and is connected to the ground terminal GND, the second end B and the control end C of the third switch unit 130 are both connected to the second connecting end 102. The first end A of the fourth switch unit 140 acts as the fourth connecting end 104 and is connected to the positive voltage terminal VCC_BAR, the second end B and the control end C of the fourth switch unit 140 are both connected to the second connecting end 102.

When the positive electrode of the battery 90 is connected to the first connecting end 101 and the negative electrode of the battery 90 is connected to the second connecting end 102, the first switch unit 110 is turned on due to a high potential applied on the control end C of the first switch unit 110, the second switch unit 120 is turned off due to a high potential applied on the control end C of the second switch unit 120, the third switch unit 130 is turned on due to a low potential applied on the control end C of the third switch unit 130, and the fourth switch unit 140 is turned off due to a low potential applied on the control end C of the fourth switch unit 140. Therefore, the battery 90 outputs voltage through the first switch unit 110 and the third switch unit 130, i.e., the battery 90 outputs voltage through the third connecting end 103 and the fifth connecting end 105.

When the negative electrode of the battery 90 is connected to the first connecting end 101 and the positive electrode of the battery 90 is connected to the second connecting end 102, the first switch unit 110 is turned off due to a low potential applied on the control end C of the first switch unit 110, the second switch unit 120 is turned on due to a low potential applied on the control end C of the second switch unit 120, the third switch unit 130 is turned off due to a high potential applied on the control end C of the third switch unit 130, and the fourth switch unit 140 is turned on due to a high potential applied on the control end C of the fourth switch unit 140. Therefore, the battery 90 outputs voltage through the second switch unit 120 and the fourth switch unit 140, i.e., the battery 90 outputs voltage through the fourth connecting end 104 and the sixth connecting end 106.

In one embodiment, as shown in FIG. 3, the first switch unit 110 and the fourth switch unit 140 may both be NMOS transistors, wherein the first end A is a source terminal S, the second end B is a drain terminal D, and the control end C is a gate terminal G. The second switch unit 120 and the third switch unit 130 may both be PMOS transistors, wherein the first end A is a source terminal S, the second end B is a drain terminal D, and the control end C is a gate terminal G.

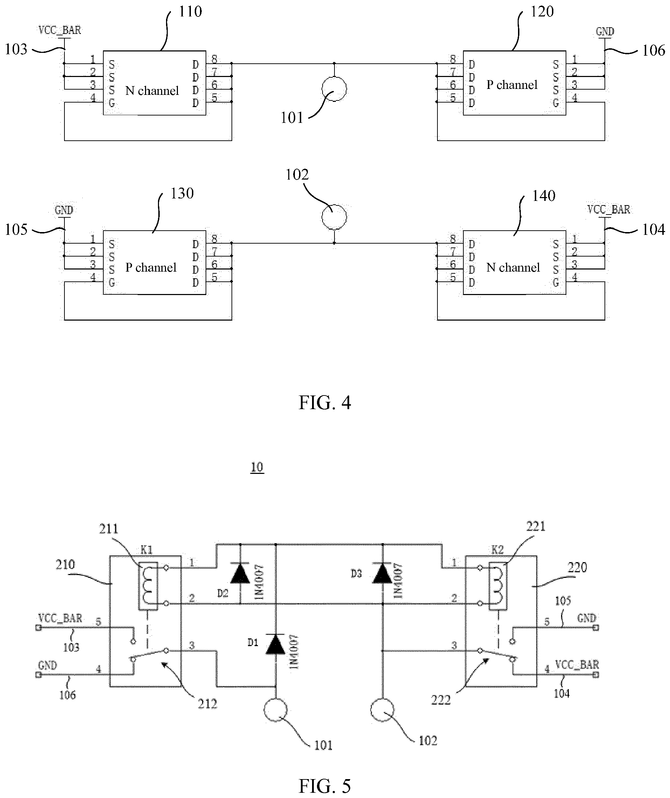

In one embodiment, as shown in FIG. 4, each of the first switch unit 110 and the fourth switch unit 140 adopts an AON6512 chip, wherein the 1^{st} to 3^{rd} pins of the AON6512 chip of the first switch unit 110 are led out for acting as the third connecting end 103 and connecting with the positive voltage terminal VCC_BAR, the 4^{th} to 8^{th} pins of the AON6512 chip of the first switch unit 110 are connected to the first connecting end 101, the 1^{st} to 3^{rd} pins of the AON6512 chip of the fourth switch unit 140 are led out for acting as the fourth connecting end 104 and connecting with the positive voltage terminal VCC_BAR, and the 4^{th} to 8^{th} pins of the AON6512 chip of the fourth switch unit 140 are connected to the second connecting end 102. Each of the second switch unit 120 and the third switch unit 130 adopts an AON6411 chip, wherein the 1^{st} to 3^{rd} pins of the AON6411 chip of the second switch unit 120 are led out for acting as the sixth connecting end 106 and connecting with the ground terminal GND, the 4^{th} to 8^{th} pins of the AON6411 chip of the second switch unit 120 are connected to the first connecting end 101, the 1^{st} to 3^{rd} pins of the AON6411 chip of the third switch unit 130 are led out for acting as the fifth connecting end 105 and connecting with the ground terminal GND, and the 4^{th} to 8^{th} pins of the AON6411 chip of the third switch unit 130 are connected to the second connecting end 102.

FIG. 5 shows a block diagram of a battery protection circuit according to another embodiment. The battery protection circuit 10 includes a first relay switch module 210 and a second relay switch module 220. The first relay switch module 210 includes a first coil 211 and a first switch 212, and the second relay switch module 220 includes a second coil 221 and a second switch 222.

Two ends of the first coil 211 are connected to the first connecting end 101 and the second connecting end 102, respectively. The normally opened contact of the first switch 212 acts as the third connecting end 103 and is connected to the positive voltage terminal VCC_BAR, the normally closed contact of the first switch 212 acts as the sixth connecting end 106 and is connected to the ground terminal GND, and the common contact of the first switch 212 is connected to the first connecting end 101.

Two ends of the second coil 221 are connected to the first connecting end 101 and the second connecting end 102, respectively. The normally opened contact of the second switch 222 acts as the fifth connecting end 105 and is connected to the ground terminal GND, the normally closed contact of the second switch 222 acts as the fourth connecting end 104 and is connected to the positive voltage terminal VCC_BAR, and the common contact of the second switch 222 is connected to the second connecting end 102.

The first connecting end 101 is connected to the first coil 211 and the second coil 221 via a first anti-reverse diode D1, and the positive terminal of the first anti-reverse diode D1 is connected to the first connecting end 101.

The first coil 211 is magnetically coupled to the first switch 212, and the second coil 221 is magnetically coupled to the second switch 222. Further, in actual implementations, the first coil 211 is located adjacent to the normally opened contact of the first switch 212. Similarly, the second coil 221 is located adjacent to the normally opened contact of the second switch 222.

When the first connecting end 101 is connected to the positive electrode of the battery and the second connecting end 102 is connected to the negative electrode of the battery, the electrical current flows through the first anti-reverse diode D1 from the first connecting end 101 (i.e., the positive electrode of the battery) to the first coil 211 and the second coil 221, and finally flows back to the second connecting end 102 (i.e., the negative electrode of the battery), to form a loop. An electromagnetic induction is generated when the electrical current flows through the first coil 211, so as to attract the spring sheet of the first switch 212 to the normally opened contact, whereby the first relay switch module 210 connects the positive electrode of the battery with the positive voltage terminal VCC_BAR through the third connecting end 103. At the same time, an electromagnetic induction is generated when the electrical current flows through the second coil 221, so as to attract the spring sheet of the second switch 222 to the normally opened contact, whereby the second relay switch module 220 connects the negative electrode of the battery with the ground terminal GND through the fifth connecting end 105.

When the first connecting end 101 is connected to the negative electrode of the battery and the second connecting end 102 is connected to the positive electrode of the battery, the electrical current cannot flow to the first coil 211 and the second coil 221 through the first anti-reverse diode D1. The spring sheet of the first switch 212 remains in the normally closed state. Therefore, the first relay switch module 210 connects the negative electrode of the battery with the ground terminal GND through the sixth connecting end 106. At the same time, the spring sheet of the second switch 222 remains in the normally closed state. Therefore, the second relay switch module 220 connects the positive electrode of the battery with the positive voltage terminal VCC_BAR through the fourth connecting end 104.

The aforementioned battery protection circuit 10 can be applied to an electronic cigarette or other electronic devices. An electronic cigarette according to an embodiment is provided as follows.

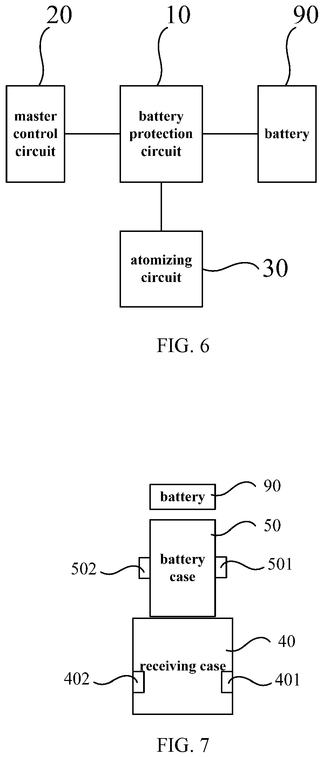

As shown in FIG. 6, an electronic cigarette according to an embodiment includes the aforementioned battery protection circuit 10, a master control circuit 20, and an atomizing circuit 30. The battery protection circuit 10 is configured for connecting with a battery 90 so as to provide power for the master control circuit 20 and the atomizing circuit 30.

The electronic cigarette can further include a battery 90. The positive electrode of the battery 90 is connected to the first connecting end 101 of the battery protection circuit 10, and the negative electrode of the battery 90 is connected to the second connecting end 102 of the battery protection circuit 10. Or optionally, the positive electrode of the battery 90 is connected to the second connecting end 102 of the battery protection circuit 10, and the negative electrode of the battery 90 is connected to the first connecting end 101 of the battery protection circuit 10. The battery protection circuit 10 can provide power for the electronic cigarette when the positive electrode and the negative electrode of the battery 90 are connected in any ways.

The battery 90 is detachably or fixedly connected to the battery protection circuit 10. The detachable connection is suitable for replaceable battery, and the aforementioned battery protection circuit 10 can prevent the user from assembling the battery reversely. The fixed connection is suitable for the situation that a replacement of the battery is not permitted, and the aforementioned battery protection circuit 10 can prevent a reverse assembly of the battery in the production process, to thereby improve an assembling efficiency. The battery 90 can be a rechargeable battery. The rechargeable battery is suitable for being detachably or fixedly connected in the electronic cigarette.

Further, as shown in FIG. 7, the electronic cigarette can further include a receiving case 40 and a battery case 50. The battery case 50 is configured for receiving the battery 90. The battery case 50 forms two first interfaces 501, 502 which are the same as each other, wherein the two first interfaces 501, 502 are respectively led out to an outside of the battery case 50 from the positive electrode and the negative electrode of the battery 90. The receiving case 40 is connected to the first connecting end 101 and the second connecting end 102 of the battery protection circuit 10. The receiving case 40 forms two second interfaces 401, 402 which are the same as each other, wherein the two second interfaces 401, 402 are respectively led out from the first connecting end 101 and the second connecting end 102 into an interior of the receiving case 40. The battery case 50 is received in the receiving case 40, and the first interfaces 501, 502 of the battery case 50 are connected to the second interfaces 401, 402 of the receiving case 40. The battery can be a button cell or a cylinder battery. Accordingly, the battery case 50 has a shape and a structure that suitable for receiving the button cell or the cylinder battery.

By the aforementioned structure, the battery case 50 has an inner structure adaptable for the positive electrode and the negative electrode of the battery, and the outer structure of the battery case 50 has a commonly used shape and structure. When the battery case 50 is assembled into the receiving case 40, it is not required to consider the direction of assembling, the assembling process is simple and convenient.

Various technical features of the above embodiments can be combined in any manner. For clarity, all possible combinations of the various technical features of the above embodiments are not described. However, as long as combinations of these technical features do not contradict with each other, they should be regarded within the scope described in the present specification.

The embodiments described above are merely preferred embodiments, but not intended to limit the application. Any modifications, alternatives or improvements made within the principle of the present application should be interpreted as falling within the protection scope of the present application. The claims are not limited to the features or acts described above. Rather, the proper scope of the application is defined by the appended claims.

## Claims

1. A battery protection circuit configured for connecting with a battery, the battery protection circuit comprising a first connecting end and a second connecting end, the first connecting end being configured for connecting with an electrode of the battery, the second connecting end being configured for connecting with an opposite electrode of the battery; wherein the battery protection circuit further comprises a third connecting end, a fourth connecting end, a fifth connecting end and a sixth connecting end; the third connecting end and the fourth connecting end are both configured for connecting with a positive voltage terminal, the fifth connecting end and the sixth connecting end are both configured for connecting with the ground terminal;
when the first connecting end is connected to the positive electrode of the battery and the second connecting end is connected to the negative electrode of the battery, the third connecting end is in connection with the first connecting end and the fifth connecting end is in connection with the second connecting end;
when the first connecting end is connected to the negative electrode of the battery and the second connecting end is connected to the positive electrode of the battery, the sixth connecting end is in connection with the first connecting end and the fourth connecting end is in connection with the second connecting end.

2. The battery protection circuit according to claim **1**, wherein the battery protection circuit comprises a first switch unit, a second switch unit, a third switch unit and a fourth switch unit, each switch unit has three ends, the three ends of each switch unit are comprised of a first end, a second end and a control end, the turning on or off between the first end and the second end is controlled according to the voltage level applied on the control end; the first switch unit and the fourth switch unit are controlled to be turned on under a high-level voltage, and controlled to be turned off under a low-level voltage; the second switch unit and the third switch unit are controlled to be turned on under a low-level voltage, and controlled to be turned off under a high-level voltage;
for the first switch unit, the first end acts as the third connecting end and is connected to the positive voltage terminal, the second end and the control end are both connected to the first connecting end;
for the second switch unit, the first end acts as the sixth connecting end and is connected to the ground terminal, the second end and the control end are both connected to the first connecting end;
for the third switch unit, the first end acts as the fifth connecting end and is connected to the ground terminal, the second end and the control end are both connected to the second connecting end;
for the fourth switch unit, the first end acts as the fourth connecting end and is connected to the positive voltage terminal, the second end and the control end are both connected to the second connecting end.

3. The battery protection circuit according to claim **2**, wherein both the first switch unit and the fourth switch unit are NMOS transistors, the first end is a source terminal, the second end is a drain terminal, and the control end is a gate terminal; both the second switch unit and the third switch unit are PMOS transistors, the first end is a source terminal, the second end is a drain terminal, and the control end is a gate terminal.

4. The battery protection circuit according to claim **3**, wherein each of the first switch unit and the fourth switch unit adopts an AON6512 chip, wherein the 1^{st} to 3^{rd} pins of the AON6512 chip of the first switch unit are led out for acting as the third connecting end and connecting with the positive voltage terminal, and the 4^{th} to 8^{th} pins of the AON6512 chip of the first switch unit are connected to the first connecting end; the 1^{st} to 3^{rd} pins of the AON6512 chip of the fourth switch unit are led out for acting as the fourth connecting end and connecting with the positive voltage terminal, and the 4^{th} to 8^{th} pins of the AON6512 chip of the fourth switch unit are connected to the second connecting end;
each of the second switch unit and the third switch unit adopts an AON6411 chip, wherein the 1^{st} to 3^{rd} pins of the AON6411 chip of the second switch unit are led out for acting as the sixth connecting end and connecting with the ground terminal, and the 4^{th} to 8^{th} pins of the AON6411 chip of the second switch unit are connected to the first connecting end; the 1^{st} to 3^{rd} pins of the AON6411 chip of the third switch unit are led out for acting as the fifth connecting end and connecting with the ground terminal, and the 4^{th} to 8^{th} pins of the AON6411 chip of the third switch unit are connected to the second connecting end.

5. The battery protection circuit according to claim **1**, wherein the battery protection circuit comprises a first relay switch module and a second relay switch module, the first relay switch module comprises a first coil and a first switch, the second relay switch module comprises a second coil and a second switch;
two ends of the first coil are connected to the first connecting end and the second connecting end, respectively; the normally opened contact of the first switch acts as the third connecting end and is connected to the positive voltage terminal, the normally closed contact of the first switch acts as the sixth connecting end and is connected to the ground terminal, and the common contact of the first switch is connected to the first connecting end;
two ends of the second coil are connected to the first connecting end and the second connecting end, respectively; the normally opened contact of the second switch acts as the fifth connecting end and is connected to the ground terminal, the normally closed contact of the second switch acts as the fourth connecting end and is connected to the positive voltage terminal, and the common contact of the second switch is connected to the second connecting end;
the first connecting end is connected to the first coil and the second coil via a first anti-reverse diode, and the positive terminal of the first anti-reverse diode is connected to the first connecting end.

6. An electronic cigarette comprising a master control circuit, an atomizing circuit and a battery protection circuit according to any one of claims **1** to **5**, wherein the battery protection circuit is configured for connecting with a battery so as to provide power for the master control circuit and the atomizing circuit.

7. The electronic cigarette according to claim **6,** further comprising a battery, wherein the positive electrode of the battery is connected to the first connecting end of the battery protection circuit, and the negative electrode of the battery is connected to the second connecting end of the battery protection circuit; or, the positive electrode of the battery is connected to the second connecting end of the battery protection circuit, and the negative electrode of the battery is connected to the first connecting end of the battery protection circuit.

8. The electronic cigarette according to claim **6,** wherein the battery is detachably or fixedly connected to the battery protection circuit.

9. The electronic cigarette according to claim **6,** wherein the battery is a rechargeable battery.

10. The electronic cigarette according to claim **6,** further comprising a receiving case and a battery case, wherein the battery case is configured for receiving the battery, the battery case forms two first interfaces which are the same as each other, the two first interfaces are respectively led out to an outside of battery case from the positive electrode and the negative electrode of the battery, the receiving case is connected to the first connecting end and the second connecting end of the battery protection circuit, the receiving case forms two second interfaces which are the same as each other, the two second interfaces are respectively led out from the first connecting end and the second connecting end into an interior of the receiving case; the battery case is received in the receiving case and the first interfaces are connected to the second interfaces.
